# EUROPEAN PATENT SPECIFICATION

(11) **EP 4 024 155 B1**
(45) Date of publication and mention of the grant of the patent: **01.11.2023**
(21) Application number: 20383175.5
(22) Date of filing: 30.12.2020
(51) Int. Cl.: G05D 1/10

(54) **METHOD, SYSTEM AND COMPUTER PROGRAM PRODUCT OF CONTROL OF UNMANNED AERIAL VEHICLES**
VERFAHREN, SYSTEM UND COMPUTERPROGRAMMPRODUKT ZUR STEUERUNG UNBEMANNTER LUFTFAHRZEUGE
PROCÉDÉ, SYSTÈME ET PRODUIT PROGRAMME INFORMATIQUE POUR LA COMMANDE DE VÉHICULES AÉRIENS SANS PILOTE

(43) Date of publication of application: 06.07.2022
(73) Proprietor: Fundación Tecnalia Research & Innovation, 20009 San Sebastián, Guipúzcoa (ES)
(72) Inventor: Sagasti Mota, Diego, 20009 San Sebastián - Guipúzcoa (ES); Aguirrezabal Colino, Pablo, 20009 San Sebastián - Guipúzcoa (ES); Gomez Bengoa, Judit, 20009 San Sebastián - Guipúzcoa (ES); García Canales, Juan, 20009 San Sebastián - Guipúzcoa (ES)
(74) Representative: Balder IP Law, S.L.

(56) References cited:
- US-A1- 2014 336 928
- US-A1- 2018 094 935
- US-A1- 2020 034 620
- US-A1- 2020 250 850

## Description

### TECHNICAL FIELD

The present invention relates to the field of unmanned aerial vehicles, and in particular to methods and systems for remote control thereof. The invention is applicable, among other fields, to industrial environments involving for example returnable containers location, stock inventory, items location, gap finding or surveillance.

### STATE OF THE ART

Several industrial necessities, such as returnable containers location, stock inventory, items location, gap finding or surveillance are partially or not fully automated labors in which human presence is still required. Techniques based on RFID, QRCode or ad-hoc sensors contribute towards the automation of the industrial environments in which they are used. However, they are still far from achieving full automation.

Unmanned aerial vehicles are expected to make a difference regarding the automation in industrial environments. For example, US10373116B2, which relates to intelligent inventory devices, discloses an aerial drone having an imaging sensor for capturing images of inventory. In other proposals, unmanned aerial vehicles are used to take pictures of an area in order to create a remote, virtual 3D environment representing the physical zone over which the vehicles are navigating. For example, in KR101992672B1 this technique is used for assessing the visual impact of transmission lines on the landscape. A similar approach is disclosed in CN109360287A for managing the inspection of transmission lines. In CN109917813A, a 3D virtual model of a physical area is created, so that an operator can remotely observe the operation of a drone in the physical area. In US10192354B2 a 3D model of a cell site is created from photos or videos captured by an unmanned aerial vehicle navigating over the cell site.

US2020/034620, US2018/094935, US2020/250850 and US2014/336928 disclose different techniques used in the art.

However, in certain scenarios, especially indoor, in which unmanned aerial vehicles usually navigate in the proximity of human beings, it is necessary to control very accurately the position of the aerial vehicles in order to prevent accidents. Besides, unmanned vehicles in indoor scenarios must be light-weighted due to the usual high density of obstacles. However, lightweight unmanned vehicles are unable to carry large sensing systems and powerful processing system, normally required to quickly prevent collision with objects or furniture. This is the case, for example, of industrial facilities, in which objects or furniture often move within the facility, increasing even more the risk of collision.

### DESCRIPTION OF THE INVENTION

The invention is set forth in the independent claims 1 and 8 and in the dependent claims.

The present invention aims at overcoming the above-mentioned difficulties associated to the control of unmanned aerial vehicles. The present invention provides a computer-implemented method and system of controlling navigation of one or more drones, which enable to accomplish industrial applications both in indoor and outdoor scenarios without requiring human intervention or requiring minor human intervention. The drones may be unmanned aerial vehicles or micro aerial vehicles. They can be managed remotely.

In the context of the present invention, the term unmanned aerial vehicle (also referred to as unscrewed aerial vehicle) (UAV) is an aircraft without a human pilot on board. In the context of the present invention, the term micro aerial vehicle or micro air vehicle (MAV) is a type of miniature UAVs that has a size restriction and may be autonomous. Current commercially available MAVs can be as small as a few centimeters, with insect-sized aircraft reportedly expected in the future. UAVs and MAVs may be autonomous or non-autonomous. The drones used in the present invention operate autonomously.

The method is capable of controlling one or more drones simultaneously. The one or more drones are configured to perform complex tasks, such as product searching and identification, obstacles identification and codes recognition, among others. These tasks are executed by a computing server, which manages the position, movement and operation of the drones.

The drones are of relatively small size and therefore light weight, therefore suitable to operate in working environments while human beings are in the same location/area. In other words, tasks performed by human operators need not be interrupted during the navigation of the drones. The drones may for example have four rotors. As a matter of example, the maximum weight of the drones may be about 250 grams (g, 10⁻³ kg), such as about 200 g, or 150 g, or 100 g, or 50 g. The maximum weight of the drone is mainly due to the equipment or components it carries. Small-size unmanned vehicles cannot usually carry much weight, so they are usually equipped with a relatively low number of sensors (for example, one imaging sensor and optionally other sensors, such as height sensor and/or depth sensor) and relatively low processing capacity configured to control the flight of the drone, keeping it stable (for example, capable of keeping the drone horizontal and capable of enabling rotation (yaw, pitch and roll) within a certain range. The minimum weight of the drones is given by the technological capacity to miniaturize electronic components and to obtain light materials. As a matter of example, there exist drones of a few grams, and their weight is expected to be reduced even more in the coming years. In sum, the proposed method and system are especially suitable to control drones which, due to their weight and size, cannot carry several sensors and large computing capabilities. Besides, due to their size and weight, such light drones are especially suitable to operate in environments where human being are also present. Consequently, due to their limited processing power and the presence of few sensors (for example, only one imaging sensor), they are usually more difficult to handle, stabilize and locate than drones having more computing power and types of sensors that facilitate piloting.

The drones are equipped with a flight controller implemented by processing means having relatively low processing capacity. The flight controller is preferably implemented by a single computer chip, such as a microcontroller unit (MCU), equipped with processor, RAM, ROM, clock and I/O control unit. The processor may be an ARM processor. The drones have onboard equipment for video transmission. Each drone is equipped with at least one inertial measuring unit (IMU) for self-stabilization of the drone, an imaging sensor (e.g. a camera) and communications equipment including wireless communication interfaces for sending images to the remote computing server. The IMU is usually installed or embedded in the flight controller, that is to say, in the processing means of the drone. Data from the IMUs is typically processed on-board (within the drone's processing means), for the self-stabilization of the drone. The imaging sensor is for example an RGB camera. The communications equipment and interfaces operate in any conventional wireless communications protocol, such as radio control, 3.5G, 4G, 5G, WiFi, or wireless proprietary protocols, or any other available technology). No GPS equipment is required. Other imaging sensors different from an RGB camera, such as depth sensors, height sensors, laser sensors, lidar or additional cameras, are neither required, but can optionally be used to capture data that may be used by the method of controlling one or more drones in a facility. The same applies to GPS equipment.

The control of the at least one drone involves control of the drone's location, drone's route and location of obstacles. This is done from a computing server, such as remote computing server, configured to receive, process and use data (information) sent by the at least one drone. The computing server may optionally use data (information) sent by other systems different from the drones.

The connection between a drone and the computing server is performed through wireless communication interfaces comprised at both ends (at the drone and at the remote computing server). Non-limiting examples of communications interfaces and equipment are radio control, 3.5G, 4G, 5G, WiFi, or any other available technology. Through this interface (or different interfaces) each drone sends images and optionally other sensor data to the computing server and the computing server sends instructions (e.g. movement commands) to each drone. The at least one drone preferably captures a sequence of images (video sequence) continuously and sends it to the server continuously.

From the images (RGB images) captured at the at least one drone and sent to the computing server, a 3D virtual model of the facility within or over which the at least one drone is navigating, is created. Optionally, in addition to the images captured at the at least one drone, additional information may also be used to create the 3D virtual model, such as: information provided by other sensors, such as height or depth sensors, or other cameras, or laser sensors, with which the one or more drones are equipped (this information is sent to the computing server through a wireless communications interface), and/or other information provided by equipment different than the drone. For example, information provided by motion capture systems, cameras and/or other sensors, not carried by the drones, may be used for building the 3D virtual model. Sensors provided by this equipment may be, for example, localization means located at different fixed points in the facility and/or localization means located at movable devices present in the facility. Non-limiting examples of movable devices that may be equipped with sensors or localization systems are working tables, robots, machines, tool magazines, shelves, vehicles, or others. This information is sent to the remote computing server through wireless communication interfaces, such as the ones already enumerated. Non-limiting examples of additional information that can optionally be received at the server, which may contribute to improve the localization of the drone, are: the distance from the drone to the floor, the distance between the drone and other objects, GPS information and orientation of the drone. These optional, additional information is captured by other sensors that may be comprised in the drone, such as height sensors and/or depth sensors.

For example, the 3D virtual model of the facility comprises a plurality of virtual elements or devices representing a plurality of corresponding real elements or devices of the facility. The 3D virtual model is a digital representation of the real working environment or facility. In embodiments of the invention, the first time the method is executed a 3D virtual model previously defined may be used, in such a way that the already existing model is updated every time images sent from the drone -and optionally other information captured by other equipment- are received at the remote computing server. In alternative embodiments of the invention, the first time the method is executed, a 3D virtual model is created from scratch, which means that a 3D virtual model is created from the images sent for the first time from the drone -and optionally from other information captured by other equipment. In embodiments of the invention, in order to create or update the 3D virtual model, the only required information from the real world is the RGB images sent by the drone.

Within the remote server, or at separate hardware equipment, different entities cooperate in order to perform the method of control of the invention. Exemplary entities are a 3D model generator, a route engine and a drones orchestration engine. In order to create or update the 3D virtual model, it is not necessary to extract features or any other information from the RGB images onboard. No processing or pre-processing of the images captured by the imaging sensor with which the drone is equipped, is required in the drone. Instead, the required processing is performed at the remote computing server from the received RGB images (and optionally from the already mentioned additional information obtained from external cameras and/or from other localization means located at fixed points in the facility and/or at movable devices). With the plurality of received images and optionally the mentioned additional information from other equipment in the real environment, the 3D virtual model of the real environment is created (or updated) using any technology enabling the creation of a 3D model from RGB images. Non-limiting examples of these technologies are: SLAM (simultaneous localization and mapping) algorithms, photogrammetry, computer vision, deep learning, 3D scanning or classical modeling from planes, among others. Regarding 3D scanning, it uses a cloud of points obtained using a laser source. 3D scanning can be used, for example, at an initial stage in which a first 3D model of the environment is created and in which equipment in the facility is recognized and incorporated into the 3D model.

SLAM algorithms permit, for example, to generate or obtain a coordinates system or reference system and therefore an origin of coordinates in the different images captured by a drone. The origin of coordinates in the different images enables to obtain the 6D pose location of the drone in each image. With this information, the 3D virtual model can be created or updated. Computer vision techniques can also be used, which, by identifying unique patterns of fixed elements (with a specific localization, position and orientation) within the facility, the coordinates system (and therefore the origin of coordinates thereof) of the whole system, can be updated. Also for example, ARCore platform, developed by Google, is based on environmental understanding and motion tracking -which may be obtained from the captured images and/or by information from the IMUs and/or other sensors- in order to create a coordinate system. In embodiments of the invention, different 3D models generated from information captured by respective different drones or external systems can be combined to form a single 3D model or map. In embodiments of the invention, once the 3D model is generated from information captured by a drone, information from external systems (such as UWB or Motion capture) can be used to locate in the 3D model those elements equipped with localizing means). Preferably, 3D model generation and updating is performed in an automatic way (with no human intervention).

The 3D virtual model is created or updated in real time. In the context of the present invention, the term real time refers to a time comprised within a range varying between a minimum value Vₘᵢₙ and an upper value of 1 minute, such as a range varying between a minimum value Vₘᵢₙ and an upper value of 30 seconds, a range varying between a minimum value Vₘᵢₙ and an upper value of 15 seconds, or a range varying between a minimum value Vₘᵢₙ and an upper value of 5 seconds. Taking into account current technology, the minimum value Vₘᵢₙ may be, for example but without limitation, 10 ms (millisecond, 10⁻³ seconds). Nevertheless, one skilled in the art will understand that the evolution of technology may enable to reduce the minimum value Vₘᵢₙ of the range to a minimum value smaller than 10 ms, such as a minimum value of 1 ms, a minimum value of 500 µs, a minimum value of 100 µs, a minimum value of 20 µs or a minimum value of 1 µs. The 3D virtual model is preferably updated several times per minute with the subsequent images sent by the on ore more drones.

Once the 3D virtual model is created or updated, for each real drone in the real environment, two virtual drones are created (drawn) at the 3D virtual model. One of the virtual drones (first virtual drone) represents the location and orientation of the real drone, that is to say, this virtual drone represents a real drone which is navigating within or over the facility. The other virtual drone (second virtual drone) represents the target location and orientation for the real drone. There are as many pairs of virtual drones as real drones navigating over the facility. The two virtual drones may be represented as a point in the 3D model, preferably with an indication of position and orientation. At each time instant, the first virtual drones are located at a respective position (x,y,z) and orientation (yaw, pitch, roll) within the 3D virtual model. The 3D virtual model, together with the virtual drones, is referred to as a digital twin of the real world (real location within or over which the drone or drones are navigating). In other words, the term digital twin or virtual twin refers to the virtual representation of an environment and the drones navigating therein.

The digital twin may be defined as a digitally actionable representation of the real world. The digital twin is actionable both ways, meaning that changes in the real world (for example, movements of the one or more drones or changes in the location of elements within the facility) affect the digital representation (first virtual drone) of such reality, which is updated when new images are received, and changes in the digital twin (for example, changes in the location of the one or more second virtual drones) force changes in the real world by recalculating the target position of the real drones. The position and orientation of each first virtual drone at a certain time instant correspond to the position and orientation of the real drone at the facility as obtained (using a technology enabling the localization in the 3D model from RGB images) for example from one or more images sent by the real drone.

The 3D virtual model, including the virtual drones, is updated in real time, meaning that the localization with 6 DoF (degrees of freedom) of the at least one drone is updated in real time. Preferably, the localization with 6 DoF of other components of the facility, such as mobile components (such as working tables, robots, machines, tool magazines, shelves, vehicles, or others) is also updated in real time. The localization of these components comprised in the facility is carried out from different information, such as from images collected by the at least one drone and from information provided by external systems. _Preferably, at least some of these components are equipped with localization means, which enable and contribute to the tracking of the components and the update of their location in the 3D virtual model. Non-limiting examples of localization means with which components of the facility may be equipped are cameras, motion capture systems and ultra-wide band (typically used with static beacons in the environment and a sensor in the drone), among others. Any other change in the real working environment (facility) that can be detected by the camera of the at least one drone is also updated in real time in the 3D virtual model. Then, at the remote computing server, a destination 3D point to which the first virtual drone must go, is defined at the 3D virtual model. At the destination 3D point, the second virtual drone is located. For each virtual drone, the remote computing server then calculates and sends to the real drone, the required movements that the real drone must perform in order to reach the target location. The remote computing server takes always into account the updated 3D virtual model and the updated location of the first virtual drone in the 3D virtual model (both the 3D virtual model and the first virtual drone are continuously being updated -updated in real time). In other words, the remote computing server calculates and sends instructions (movement commands) to a real drone from data received from the real drone (images and optionally other information) and from the virtual drone and 3D virtual model. These instructions are instructions for the real drone to adjust its position and orientation (6 DoF: position XYZ and rotation YAW PITCH ROLL), in such a way that it synchronizes with the first virtual drone as quick as possible. With the subsequent sending of movement commands or instructions from the remote computing server to the one or more drones, each drone can reach its target position (so that the first virtual drone matches the second virtual drone) in order to accomplish the task for which it has been programmed or configured.

In order to calculate or compute the movements that a drone needs to perform in order to reach a target position (in turn in order to accomplish a task), the remote computing server may use different techniques, such as an inference engine configured to calculate a route, or an Artificial Intelligence (Al) model, or a routing engine implementing classic routing techniques. The module for computing the drone movements may be implemented at the remote computing server or separated therefrom (for example at a processing means located remotely with respect to the remote computing server). The module (for example, inference engine or AI model) may have been trained with reinforcement learning techniques to calculate the best possible route for a drone to reach a target destination, avoiding collisions, bearing in mind that the topology of the working environment can change at any time.

Besides, centralizing at the remote computing server the treatment of all the information coming from the one or more drones and optionally from additional external systems (if there are any), also allows to apply drone swarm (groups of drones) orchestration techniques for the optimization of flight plans oriented to different tasks.

When a real drone receives a new movement command, it moves (navigates) according to the movement command. From the new location of the drone reached after following the movement command, the drone sends one or more images captured by the camera to the remote server. At the remote server, from information extracted from the new images, the 3D virtual model of the facility and the location of the first virtual drone in the 3D virtual model are updated, in such a way that changes in the facility are reflected in the 3D virtual model. Then, the route to reach the destination 3D point (represented for example by a second virtual drone or target virtual drone) is recalculated, if necessary, taking into account the updated 3D virtual model and the new location of the first virtual drone in the 3D virtual model. And at least one movement command is sent to the drone navigating within or over the facility, for reaching the destination point at the facility.

In a first aspect of the invention, a computer implemented method of controlling navigation of at least one drone, is disclosed. The method comprises: from at least one drone navigating within or over a facility, the at least one drone being equipped with an imaging sensor, sending a plurality of pictures captured by the imaging sensor to a server through a wireless communications interface; at the server: receiving the plurality of pictures and, from the pictures, obtaining a 3D virtual model of the facility within or over which the at least one drone is navigating, the 3D virtual model comprising, for each drone navigating within or over a facility: a first virtual drone located within the 3D virtual model at a position and orientation calculated from the received pictures, said position and orientation representing the position and orientation of the drone navigating within or over a facility; and a second virtual drone located within the 3D virtual model at a target position and orientation representing the position and orientation to be reached by the drone navigating within or over a facility; for each drone navigating within or over a facility, sending to the drone at least one movement command for reaching the point at the facility which corresponds to the location of the second virtual drone at the 3D virtual model; the at least one drone navigating according to the at least one movement command and, from the new location of the at least one drone, pictures captured by the imaging sensor to the server; at the server: from information extracted from the pictures sent by each drone, updating the 3D virtual model of the facility and the location of each first virtual drone in the 3D virtual model, in such a way that changes in the facility captured by the pictures are reflected in the 3D virtual model; and repeating the steps of navigating the at least one drone, within or over the facility according to the movement commands sent by the server, sending pictures captured by the at least one drone from the new location to the server, updating the 3D virtual model of the facility from the pictures, and sending to each drone new movement commands, until the drone at the facility reaches the position and orientation of the second virtual drone as defined in the 3D virtual model.

In embodiments of the invention, the 3D virtual model further comprises a plurality of virtual elements representing a plurality of corresponding real elements of the facility.

In embodiments of the invention, defining at the 3D virtual model a target position for each second virtual drone, is performed by a routing engine, the routing engine further computing the movements each respective drone must perform, wherein the routing engine may be a routing inference engine, or a routing engine implementing an Artificial Intelligence model, or a routing engine implementing classic routing techniques.

In embodiments of the invention, the 3D virtual model of the facility is created using one or more of the following techniques: Simultaneous Location and Mapping (SLAM) techniques, computer vision techniques, photogrammetry-based techniques, deep learning techniques, and techniques based on motion tracking.

In embodiments of the invention, for creating the 3D virtual model of the facility, data obtained from at least one external system in the facility is also used.

In embodiments of the invention, for creating the 3D virtual model of the facility, data obtained from other sensors of the at least one drone are used, wherein the other sensors comprise one or more of the following: IMU, height sensor, depth sensor, other cameras, laser sensors and lidar.

In embodiments of the invention, a human operator can interact with the 3D virtual model through a man-machine interface, by dragging a second virtual drone to a location and/or orientation different from the one the corresponding real drone has in the real facility, so that the movement the drone must performed are recomputed and movement commands are sent to the real drone in order to move and/or rotate the drone until the first virtual drone fits the position and orientation of the second virtual drone.

In a second aspect of the invention, a system is disclosed. The system comprises: at least one drone configured to navigate within or over a facility, the at least one drone being equipped with an imaging sensor configured to capture a plurality of pictures and wireless communications interface configured to send the captured at least one picture; a server configured to: receive the at least one picture and, from the at least one picture, obtaining a 3D virtual model of the facility within which the at least one drone is navigating, the 3D virtual model comprising, for each drone navigating within or over a facility: a first virtual drone located within the 3D virtual model at a position and orientation calculated from the received at least one picture; and a second virtual drone located within the 3D virtual model at a target position and orientation representing the position and orientation to be reached by the drone navigating within or over a facility; for each drone navigating within or over a facility, send to the drone at least one movement command for reaching the point at the facility which corresponds to the location of the second virtual drone at the 3D virtual model; the at least one drone being configured to navigate according to the at least one movement command and, from the new location of the at least one drone, send at least one picture captured by the imaging sensor to the server; the server being configure to, from information extracted from the at least one picture sent by each drone: update the 3D virtual model of the facility and the location of each first virtual drone in the 3D virtual model, in such a way that changes in the facility captured by the at least one picture are reflected in the 3D virtual model; repeat the steps of navigating the at least one drone within or over the facility according to the movement commands sent by the server, sending at least one picture captured by the at least one drone from the new location to the server, updating the 3D virtual model of the facility from the at least one picture, and sending to each drone new movement commands, until the drone reaches at the facility the position and orientation of the second virtual drone as defined in the 3D virtual model.

In embodiments of the invention, the at least one drone further comprises an I MU, the at least one drone being configured to send through the wireless communications interface data captured by the I MU to the server.

In embodiments of the invention, the at least one drone further comprises a height sensor and / or a depth sensor and/or other cameras and/or a laser sensor and/or a lidar, the at least one drone being configured to send through the wireless communications interface data captured by said sensor or sensors to the server.

In embodiments of the invention, the system further comprises at least one external system configured to capture data and to send the captured data to the server, such that the data captured by the at least one external system contributes to the creation of the 3D virtual model of the facility.

In a third aspect of the invention, a computer program product comprising computer program instructions/code for performing the method according to the first aspect of the invention, is provided.

In a fourth aspect of the invention, a computer-readable memory/medium that stores program instructions/code for performing the method according to the first aspect of the invention, is provided.

Additional advantages and features of the invention will become apparent from the detail description that follows and will be particularly pointed out in the appended claims.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figure 1 illustrates a block diagram of a facility within which several drones are navigating for performing tasks under the control of a remote server, according to embodiments of the present invention.
Figure 2 shows a block diagram of a drone, including exemplary systems of which it may be composed according to embodiments of the invention.
Figure 3 shows a block diagram of a computing server controlling a group of drones, for which the server uses different entities, such as a model for route calculation, a 3D model generator and optionally a drones orchestration engine.
Figure 4 shows a flow diagram of the method of controlling one or more drones, according to embodiments of the invention.

### DESCRIPTION OF A WAY OF CARRYING OUT THE INVENTION

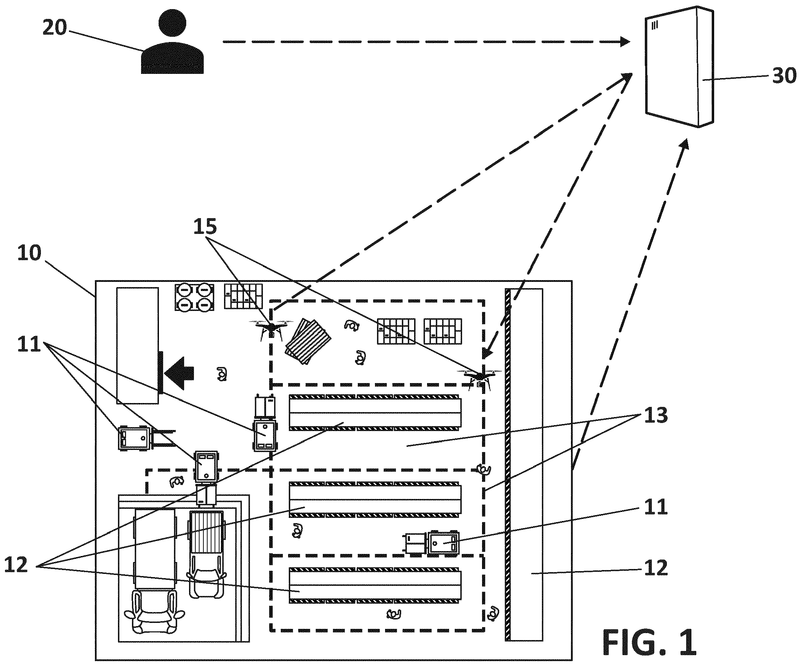

Figure 1 schematically shows a top view of a facility 10 within which one or more drones 15 navigate in order to perform a respective task that has been assigned to it/them. In the shown embodiment the facility 10 is an industrial facility, such as a warehouse, whose ceiling has been removed from the drawing in order to show the content of the facility. The warehouse is equipped with different apparatus or components, whose position may be fixed of movable within the facility. For example, there may be fork-lift trucks 11, which are typically movable (they move along the warehouse), and shelves 12, which are typically placed at a relatively permanent position within the warehouse. Shelves 12 usually define corridors 13 between or next to them. There may also be other devices, such as robots, furniture, working tables, machines, tool magazines, other vehicles, etc. In the facility there are usually human beings, for example operators performing their work. Besides, there are one or more drones 15 (two drones in the shown embodiment) for performing certain tasks, such as inventory, supervision or others.

Drones 15 are typically light-weighted drones, equipped with a propulsion motor group, a flight controller and an Electronic Speed Controller (ESC) per motor, which translate control instructions into precise instructions sent to the motors for control movement. Drones 15 are not autonomous per se. In other words, they may have certain onboard capabilities in order to automate certain tasks, such as the self-stabilization of the drone, obtained through an inertial measuring unit (IMU), maintaining a substantially horizontal position with respect to the plane defined by the floor, and/or maintaining a certain distance with respect to the floor. Autonomous operation is achieved by the proposed method, which enables the drones 15 to take off, prevent collisions and reach a target position under the control of a remote server.

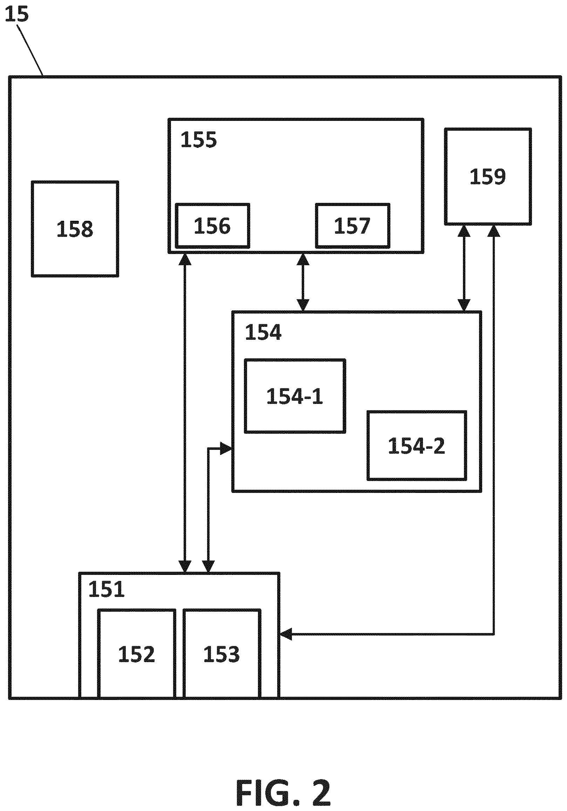

A drone 15 can be represented as shown in the block diagram of Figure 2, which shows the hardware and software systems within. Block 159 generally represents the propulsion motor group, including any required conventional components, such as motors, rotors (such as four rotors), etc. Blocks 152 and 153 show transmitting and receiving equipment or interfaces, respectively, for wireless communication with remote systems or devices. Interfaces 152, 153 are comprised in a communications interface 151. Block 154 represents a computer system having a processor 154-1 and computer-readable memory 154-2. Computer system 154 typically implements the flight controller and the ESC. Processor 154-1 and computer-readable memory 154-2 may be implemented in a single chip, such as a microcontroller unit (MCU), equipped with processor, RAM, ROM, clock and I/O control unit. The processor may be, for example, an ARM processor. Block 155 shows the sensors system of the drone. The drone comprises at least one image sensor 156, such as a RGB camera. For example, images captured by the image sensor 156 are sent to a computing server through transmitting interface 152. Movement commands sent by the remote computing server are received by receiving interface 153, from which they are sent to computer system 154. The communications equipment and interfaces 152, 153 may comprise transmitting and receiving equipment configured to operate in one or more conventional wireless communications protocols, such as radio control, 3.5G, 4G, 5G, WiFi, proprietary protocols or any other available technology. The transmitting and receiving interfaces may implement more than one communications protocol. For example, video (images) may be sent using a communications protocol different from the communications protocol used to send other data. Wireless interfaces can be implemented with different communications protocols, such as a radio control protocol for receiving flight commands, another communications protocol for sending video, and/or another communications protocol for sending other sensor data. Alternatively, a single communications protocol can be used for receiving flight commands and sending data, including video and other sensor data. The drone also has an inertial measuring unit (IMU) 157 for self-stabilization of the drone. Although shown as a separate block 157, the IMU may be installed or embedded in the flight controller, that is to say, in the processing means 154 of the drone. Data from the IMUs is typically processed on-board (within the drone's processing means), for the self-stabilization of the drone. The drone can optionally comprise other sensors, not shown, such as height sensors and/or depth sensors and/or GPS module and/or other cameras and/or laser sensors and/or lidar. These sensors/modules may also send captured data to the computer server. Block 158 shows a power system (e.g. a battery).

Figure 1 also shows a computing server 30 which can be within the facility 10 or remote thereto, in which case it is a remote computing server. A person 20 (such as a person responsible for the operation of the drones 15) sends the computing server 30 an industrial task to be completed. This may be done, for example, from a computer located for example at the facility 10, or from any other location from which supervision of the drones 15 may be done. The person 20 can directly communicate with the computing server 30 through a man-machine interface (MMI) or can communicate with the computing server 30 from a different computer through a communications network, such as the internet. Tasks to be sent to the computing server 30 may be, for example, an order for inventory checking, or any other task. Computing server 30 comprises processing means, such as one or more processors. In some embodiments of the invention, the one or more processors of the computing server 30 includes one of: a central processing unit or at least one core thereof, a graphics processing unit, a field-programmable integrated circuit such as an FPGA (i.e. field-programmable gate array), as hardware accelerator, or an embedded circuit (e.g. a system-on-chip, a multiprocessor system-on-chip) -e.g. Zynq, MPSoC by Xilinx-, and a combination thereof. In some embodiments of the invention, the one or more processors of the computing server 30 includes a multi-core central processing unit.

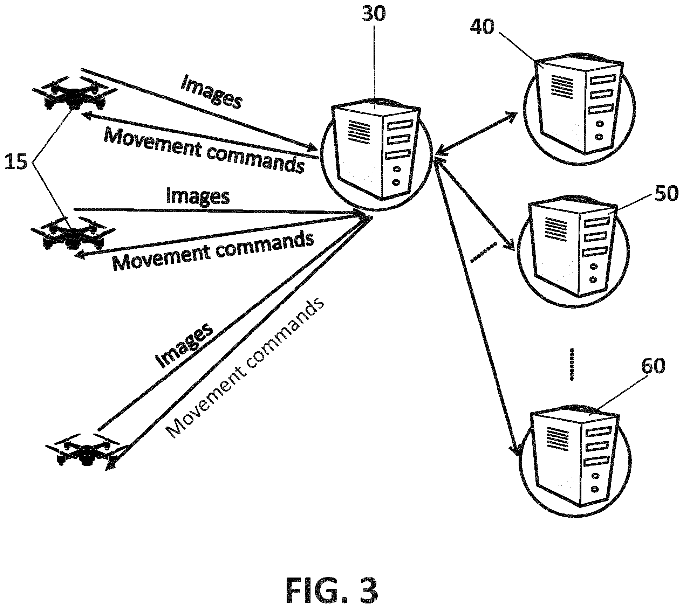

Once the server 30 is aware of the task the one or more drones 15 must perform, the method of remote control of drones is executed. In order to control the drones 15, the server 30 communicates with other units, entities or engines, which may be embedded within the server hardware, or may be located remotely with respect to the server 30. Figure 3 illustrates the entities with which the server 30 communicates in order to achieve full control of the drones 15. One of these entities is a route engine or route manager 40, aimed at calculating the route or routes a drone 15 must follow and/or for changing topologies in order to do its task(s). In a possible embodiment, the route engine 40 is based on reinforcement learning trainings. Another entity is a 3D model generator 50, required for creating a digital model or map of the facility 10. In a possible embodiment, the 3D model generator 50 uses a SLAM (simultaneous localization and mapping) algorithm for creating a 3D model from the RGB images captured and sent by the drone 15. Other technologies used by the 3D model generator 50 in addition to SLAM algorithms, or alternatively thereto, are photogrammetry-based techniques, computer vision techniques, deep learning techniques and techniques based on motion tracking. Another entity, which is optional, is a drones orchestration engine 60. Drones orchestration engine 60 is required when there is more than one drone 15 within the facility 10. It is based on route optimization algorithms. In embodiments of the invention, the computing server 30 receives data different from the images captured by the drones 15. For example, data from the drone IMU 157, or information about height or depth captured by corresponding height or depth sensors, or GPS data, or others, may be sent to the computing server 30, and/or data from systems external to the drones may also be sent to the computing server 30. Data regarding height or depth of the drone may not only be used to create the 3D model, but also for security purposes, for example to guarantee that the drone will not collide with current potential obstacles. The same applies to IMU data, which can be used for security and stabilization purposes. External systems may for example be actuators or sensing means, such as localization means, movement tracking means or cameras located at different fixed points in the facility (such as shelves or walls, generally referred to as 12 in Figure 1) and/or at movable devices present in the facility (such as robots, vehicles or fork-lift trucks, generally referred to as 11 in Figure 1). External systems may for example be equipped with Ultra Wide Band technology for capturing the position and orientation of predefined elements (including the drones). Data captured by these external systems are sent to the computing server 30 through wireless communication interfaces with which both the server 30 and the sensing systems are equipped.

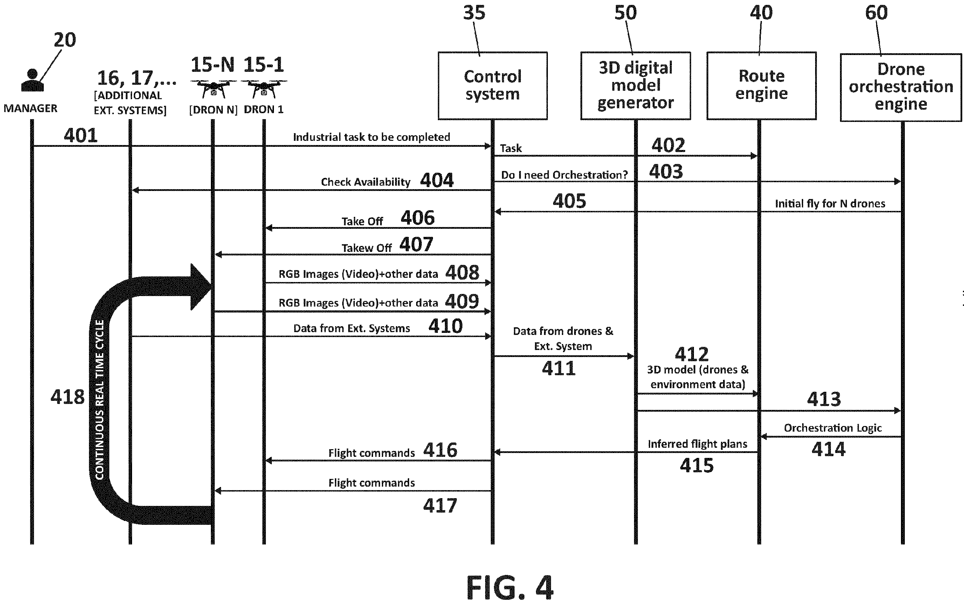

A method of controlling navigation of one or more drones in a facility is depicted in the flow diagram of Figure 4. First, an operator 20 informs (stage 401) the server 30 about the industrial tasks to be performed by the drones (15_1, ..., 15_N in Figure 4). The server 30 is composed of different modules, mainly: a core or control system 35, a route engine 40, a 3D model generator 50 and a drones orchestration engine 60. The message (stage 401) from the operator 20 is received by the server's control system 35, which then requests (stage 402) the route engine 40 to calculate routes for each of the drones. Response to this request (stage 402) is provided at stage 415. In embodiments of the invention, not shown in Figure 4, computer vision techniques can be used to initialize an origin of coordinates from a predefined pattern or group of patterns at the end of a first flight. Thus, an origin of coordinates is already available for future reference. In an embodiment of the invention, not shown in Figure 4, the control system 35 has already been provided with a pre-generated 3D model of the facility. In this case, the drones 15_1, ..., 15_N are requested by the control system 35 to work in exploring mode, meaning that they must take off, start flying and, when they approach an object, start to take pictures and send them to the control system 35 for updating the pre-generated 3D model. In this case, the route to be followed by each drone may be calculated through classic searching algorithms, or by applying reinforcement learning. For example, the server may know the initial position of each drone and the drones may have been instructed to start a simple exploring flight until full localization by the server (control system) is achieved.

The control system 35 also asks (stage 403) the drones orchestration engine 60 whether orchestration is required or not. In embodiments of the invention, this is only done when there is more than one drone. The drones orchestration engine 60 indicates (stage 405) which drones are going to be used. Later, the drones orchestration engine 60 provides the route for each drone at stage 414.

The control system 35 then checks (stage 404) availability with additional external systems 16, 17. In particular, the control system 35 requests which additional data from external localization systems 16, 17 (for example received from equipment located within the facility 10, such as fixed equipment 12 or movable equipment 11, which is equipped with sensor capable of sending collected data to the server 30) are available. The available fixed equipment 12 and/or movable equipment 11, equipped with external localization systems 16, 17 (or with sensors capable of sending collected data to the server 30), send their collected data (if they have collected data) to the server's control system 35 at stage 410. Alternatively, availability with additional external systems 16, 17, can be provided manually (for example, by a human operator).

The server's control system 35 then orders to take off to the drones (stages 406, 407). It is remarked that, as already explained, in embodiments of the invention the drones can be already flying in an exploring mode, in which case it is not necessary to send the take off order (stages 406, 407). The take off order is performed by sending a command to each of the drones 15_1, 15_N. These instructions are sent through the wireless communications interfaces with which both the server and the drones are equipped. This may be done following conventional radio communications systems used by conventional drones, or through a specific (e.g. dedicated) communications interface (for example, a WiFi interface) between each drone and the server.

So, the drones 15_1, 15_N start navigating over the facility 10. In a possible embodiment, starting commands 406, 407 only include an order to take off (start engines and move up). In another embodiment, the drone may have, embedded in its processing means, a first target to fly to. In preferred embodiments, the drones only understand simple commands ("move up", "turn left", "turn right", "stop", etc.).

Each drone starts taking images with its imaging sensor 156 and the one or more images are sent to the control system 35 through the transmitting interface 152 (stages 408, 409). Optionally, the drones can also send the server 30 IMUs data. If there are available external systems or devices equipped with sensing capabilities, these external systems 16, 17 also send the server 30 (control system 35) data captured by their sensing devices (stage 410).

The server 30 then creates (or updates if there is already one available) a 3D digital model of the facility 10, as follows.

From the images (and from additional data, such as data from sensors and/or external systems 11, 12), the server 30 performs the following calculations (computations): At the 3D model generator 50, a 3D digital model of the facility 10 is created, preferably in real time, from the images (and optionally from additional data, such as data from external systems 11, 12) (stage 411). Optionally, at the 3D model generator 50, segmentation of unitary elements can be performed. For example, unitary elements can be identified from information extracted from the images. This may be done using deep learning techniques or computer vision techniques, for example. The 3D model generator 50 may use SLAM algorithms, photogrammetry-based techniques, deep learning techniques, techniques based on motion tracking or a combination of the former. Then, with the data (such as a 3D model, which can include the unitary elements also obtained) provided by the 3D model generator 50 to the route engine 40 (stage 412), the localization of the drone 15 with 6 DoF is obtained, the environment is recognized and devices within the facility are identified. So, from the received images (and optionally from the already mentioned additional data obtained from for example localization means 16, 17 located at fixed points in the facility and/or at movable devices), a 3D virtual model of the real environment (facility 10) is created or updated at the 3D model generator 50. Therefore, at the 3D model generator 50 the 3D model can be created and the drones can be localized (using for example SLAM techniques).

SLAM algorithms permit, for example, to obtain a reference system (such as a coordinates system) and therefore an origin of coordinates from the different images (and features extracted from the images) captured by each drone. This permits to generate the 3D model and to localize a device within the 3D model (and therefore within the environment represented by the 3D model). The origin of coordinates in the different images enables to obtain the 6D pose location of the drone in each image. With this information, the 3D virtual model is created or updated. Optionally, the different reference systems generated (for example using SLAM techniques) from images of each drone can be unified in a single reference system. This may be done using computer vision techniques, which can use markers or unique patterns located in specific points (with well-known size, position and orientation) in the facility, to update a single (or general) reference system by correlating the reference system generated from images of each drone and the single (or general) reference system. Patterns can be obtained using conventional computer vision techniques, such as OpenCV libraries or Augmented Reality libraries.

So, SLAM techniques and/or other techniques are used in conjunction with data received from the drones 15_1... 15_N and optionally from external systems 16, 17, to know in real time the exact location of the drones and other equipment within the facility 10. Other motion capture techniques may be used in addition to or instead of SLAM techniques. In other words, the 3D model can be created or updated using SLAM, computer vision, photogrammetry, deep learning, 3D scanning, classical modeling from planes, or any other conventional technique for generating 3D models. SLAM techniques and other techniques that may be used for this purpose are out of the scope of the present invention.

The creation of the 3D virtual model includes the creation of two virtual drones per real drone in the real environment. There are as many pairs of virtual drones as real drones navigating over the facility. One of the virtual drones (first virtual drone) represents the location of a real drone which is navigating within or over the facility. This first virtual drone is within the created 3D model, at a specific position and orientation (obtained from the SLAM algorithm or from computer vision technique (for example from fixed patterns in the facility) or from any other localization system used), and/or from sensing information obtained from external systems 16, 17). In other words, the first virtual drone represents data obtained about the position and orientation of the real drone. Therefore, at each time instant, the first virtual drones (one per real drone) are located at a respective position (x,y,z) and orientation (yaw, pitch, roll) within the 3D virtual model. The other virtual drone (second virtual drone) represents the target location for the real drone. This second virtual drone is moved within the 3D model by the route engine 40. The second virtual drone defines the position and orientation that must achieve the first virtual drone (and therefore, the real drone in the real environment). In embodiments of the invention, the second virtual drone may be located in the 3D model at an intermediate position and orientation with respect to its final location (target location) for performing the task assigned to the real drone. These intermediate positions are for example provided by the route engine at stage 415. At each execution stage, from the difference between the position and orientation of the first virtual drone and the position and orientation of the second virtual drone, the control system 35 decides which flight commands must be sent to the real drone (stages 416, 417) so that it can approach as quickly as possible (but also as safety as possible, that is to say, preventing any collision with obstacles) to the position and orientation of the second virtual drone. It is remarked that potential obstacles are also included in the 3D model because they have been captured by the images taken by the at least one real drone and optionally by sensors comprised in other equipment 16, 17. So, the control system 35 calculates and sends instructions (movement commands) to a real drone. These instructions are simple instructions or single movements ("move UP", "move DOWN", "turn LEFT", "turn RIGHT", etc.) for the real drone to adjust its position and orientation (6 DoF: position XYZ and rotation YAW PITCH ROLL).

The two virtual drones associated to a real drone 15_1 may be represented as a point in the 3D model, preferably with an indication of position and orientation. The 3D virtual model, together with the virtual drones, is referred to as a digital twin of the real world (real location within or over which the drone or drones are navigating). In sum, the digital twin (3D virtual model of the facility 10 and virtual drones) is a digitally actionable representation of the real world. It is actionable both ways, meaning that changes in the real world (for example, movements of the one or more drones 15 or changes in the location of elements 12 within the facility 10) affect the digital representation of such reality and changes in the digital twin (for example, changes in the location of the second virtual drones in the virtual model) force changes in the real world.

In embodiments of the invention, a human operator can interact with the 3D virtual model through a man-machine interface MMI, such as a mouse or a touch-screen display. If a human operator draws or drags the second virtual drone in a location and/or orientation different from the one the real drone 15_1 has in the real facility 10, the method acts to -through commands 416, 417 sent to the drone 15_1- move and/or rotate the drone until it perfectly fits the position and orientation of the second virtual drone. When the real drone 15_1 in the facility 10 reaches the target position and orientation, the two virtual drones will be in the same position and orientation in the 3D virtual model. This way, the real drone 15_1 is moved through the movement of the second virtual drone in the 3D virtual model. This way, the real drone 15_1 can also avoid obstacles which position is updated in real time in the virtual model.

Once the 3D digital model of the facility 10 and virtual drones representing the real drones 15 are created, a destination 3D point to which the first virtual drones (the ones representing the current position of the real drones) must go, is defined at the 3D virtual model. This is done at the route engine 40. Second virtual drones may be located on this destination 3D points, which are the target positions for each first virtual drone (and corresponding real drones). There may be intermediate target positions. The flight plans are then inferred at the route engine 40 and sent to the server 30 (stage 415). For each pair of virtual drones, the control system 35 then sends to each drone 15_1 ... 15_N its respective flight commands (stage 416, 417), which are the required movements that the real drone 15 must perform in order to reach the target location. The control system 35 takes always into account the updated 3D virtual model and the updated location of the first virtual drone in the 3D virtual model (both the 3D virtual model and the first virtual drone are continuously being updated -updated in real time). In other words, the control system 35 calculates and sends instructions (movement commands) to a real drone from data (images and optionally other information from the drone and/or from external sources) received from the real drone - these data are represented in the first virtual drone- and from the 3D virtual model and location and orientation of the second virtual drone (target drone) within the 3D virtual model. When a drone 15_1, 15_N receives a new movement command (instructions) 416, 417, it moves (navigates) according to the movement command. These instructions are instructions for the real drone to adjust its position and orientation (6 DoF: position XYZ and rotation YAW PITCH ROLL), in such a way that it synchronizes with the first virtual drone as quick as possible. From the new location of the real drone 15_1, 15_N reached after following the movement command, the drone sends again one or more images captured by the camera 156 to the server 30 (control system 35) (stage 418). With the subsequent sending of movement commands or instructions from the control system 35 to the one or more drones, each drone can reach its target position in order to accomplish the task for which it has been programmed or configured. Movement commands are preferably simple, single commands, such as "move forward", "move backwards", "go up", "go down", "turn left", "turn right", etc. In embodiments of the invention, these commands are similar to the commands sent to a conventional drone using a conventional remote radio control. A control algorithm for the flight commands may be embedded in the control system 35. Different control algorithms may be used. For example, an algorithm which takes into account the distance between the first virtual drone and the second virtual drone may be used. In this case, when the first and second virtual drones are far from each other, the movement commands will be applied with more strength than when the first and second virtual drones are close to each other. The algorithm may use AI techniques, such as reinforcement techniques, in such a way that the algorithm will learn that when the two virtual drones are far from each other, the movement command should be accompanied with more strength (or speed), while when the two virtual drones are closer to each other, the movement command should be accompanied with less strength (or speed).

The movement of the real drone through the flight commands 416, 417 may be done in different ways. In embodiments of the invention, it is done by means of an interface through which radio signals are sent to the drone 15. In embodiments of the invention, it is done through an API specially designed for this purpose. In embodiments of the invention, it is done through a servo control or robotic means configured to physically control the remote control of the drones.

The 3D virtual model, including the first virtual drones, is updated in real time, meaning that the localization with 6 DoF (degrees of freedom) of the at least one drone is updated in real time. Preferably, the localization with 6 DoF of other components of the facility, such as mobile components (such as working tables, robots, machines, tool magazines, shelves, vehicles, or others) is also updated in real time. The localization of these components comprised in the facility is carried out from the images collected by the at least one drone and/or from data obtained from external systems 16, 17, which enable and contribute to the tracking of the components and the update of their location in the 3D virtual model. Any other change in the real working environment (facility) that can be detected by the camera of the at least one drone and/or by external sources is also updated in real time in the 3D virtual model.

So, at the server (control system 35), from information extracted from new images and/or from other sensors and/or from information extracted from other localization systems, the 3D virtual model of the facility and the location of the first virtual drone(s) in the 3D virtual model are updated, in such a way that changes in the facility are reflected in the 3D virtual model. Then, the route to reach the destination 3D point (second virtual drone) for each drone is recalculated taking into account the updated 3D virtual model and the new location of the first virtual drone(s) in the 3D virtual model. And at least one movement command is sent to the drone(s) navigating within or over the facility, for reaching the destination point at the facility.

In sum, the proposed method manages to control the navigation of one or more drones in or over a facility, especially an indoor facility.

The invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. A computer implemented method of controlling navigation of at least one drone, comprising:
from at least one drone (15, 15_1, ..., 15_N) navigating within or over a facility (10), the at least one drone (15, 15_1, ..., 15_N) being equipped with an imaging sensor (156), sending a plurality of pictures captured by the imaging sensor (156) to a server (30) through a wireless communications interface (152);
**characterized in that**, the computer implemented method further comprises: at the server (30):
receiving the plurality of pictures and, from the pictures, obtaining a 3D virtual model of the facility (10) within or over which the at least one drone (15, 15_1, ..., 15_N) is navigating, the 3D virtual model comprising, for each drone (15, 15_1, ..., 15_N) navigating within or over a facility (10): a first virtual drone located within the 3D virtual model at a position and orientation calculated from the received pictures, said position and orientation representing the position and orientation of the drone (15, 15_1, ..., 15_N) navigating within or over a facility (10); and a second virtual drone located within the 3D virtual model at a target position and orientation representing the position and orientation to be reached by the drone (15, 15_1, ..., 15_N) navigating within or over a facility (10);
for each drone (15, 15_1, ..., 15_N) navigating within or over a facility (10), sending to the drone (15, 15_1, ... 15_N) at least one movement command (416, 417) for reaching the point at the facility (10) which corresponds to the location of the second virtual drone at the 3D virtual model;
the at least one drone (15, 15_1, ... 15_N) navigating according to the at least one movement command (416, 417) and, from the new location of the at least one drone (15, 15_1, ... 15_N), pictures captured by the imaging sensor (156) to the server (30);
at the server (30):
from information extracted from the pictures sent by each drone (15, 15_1, ... 15_N), updating the 3D virtual model of the facility (10) and the location of each first virtual drone in the 3D virtual model, in such a way that changes in the facility (10) captured by the pictures are reflected in the 3D virtual model;
and
repeating the steps of navigating the at least one drone (15, 15_1, ... 15_N) within or over the facility (10) according to the movement commands sent by the server (30), sending pictures captured by the at least one drone from the new location to the server (30), updating the 3D virtual model of the facility from the pictures, and sending to each drone (15, 15_1, ...15_N) new movement commands, until the drone (15, 15_1, ...15_N) at the facility (10) reaches the position and orientation of the second virtual drone as defined in the 3D virtual model.

2. - The method of claim 1, wherein the 3D virtual model further comprises a plurality of virtual elements representing a plurality of corresponding real elements (11, 12) of the facility (10).

3. - The method of any one of claims 1-2, wherein defining at the 3D virtual model a target position for each second virtual drone, is performed by a routing engine (40), the routing engine (40) further computing the movements each respective drone must perform, wherein the routing engine (40) may be a routing inference engine, or a routing engine implementing an Artificial Intelligence model, or a routing engine implementing classic routing techniques.

4. - The method of any one of claims 1-3, wherein the 3D virtual model of the facility (10) is created using one or more of the following techniques: Simultaneous Location and Mapping (SLAM) techniques, computer vision techniques, photogrammetry-based techniques, deep learning techniques, and techniques based on motion tracking.

5. - The method of any one of claims 1-4, wherein for creating the 3D virtual model of the facility (10), data obtained from at least one external system (16, 17) in the facility (10) is also used.

6. - The method of any one of claims 1-5, wherein for creating the 3D virtual model of the facility (10), data obtained from other sensors of the at least one drone are used, wherein the other sensors comprise one or more of the following: IMU, height sensor, depth sensor, other cameras, laser sensors and lidar.

7. - The method of any one of claims 1-6, wherein a human operator can interact with the 3D virtual model through a man-machine interface, by dragging a second virtual drone to a location and/or orientation different from the one the corresponding real drone has in the real facility (10), so that the movement the drone must performed are recomputed and movement commands are sent to the real drone in order to move and/or rotate the drone until the first virtual drone fits the position and orientation of the second virtual drone.

8. - A system comprising:
at least one drone (15, 15_1, ..., 15_N) configured to navigate within or over a facility (10), the at least one drone (15, 15_1, ..., 15_N) being equipped with an imaging sensor (156) configured to capture a plurality of pictures and wireless communications interface (151) configured to send the captured pictures;
**characterized in that** the system further comprises:
a server (30) configured to:
receive the plurality of pictures and, from the pictures, obtaining a 3D virtual model of the facility (10) within or over which the at least one drone (15, 15_1, ..., 15_N) is navigating, the 3D virtual model comprising, for each drone (15, 15_1, ..., 15_N) navigating within or over a facility (10): a first virtual drone located within the 3D virtual model at a position and orientation calculated from the received at least one picture; and a second virtual drone located within the 3D virtual model at a target position and orientation representing the position and orientation to be reached by the drone (15, 15_1, ..., 15_N) navigating within or over a facility (10);
for each drone (15, 15_1, ..., 15_N) navigating within or over a facility (10), send to the drone (15, 15_1, ...15_N) at least one movement command (416, 417) for reaching the point at the facility (10) which corresponds to the location of the second virtual drone at the 3D virtual model;
the at least one drone (15, 15_1, ...15_N) being configured to navigate according to the at least one movement command (416, 417) and, from the new location of the at least one drone (15, 15_1, ...15_N), sending a plurality of pictures captured by the imaging sensor (156) to the server (30);
the server (30) being configure to, from information extracted from the at least one picture sent by each drone (15, 15_1, ...15_N): update the 3D virtual model of the facility (10) and the location of each first virtual drone in the 3D virtual model, in such a way that changes in the facility (10) captured by the at least one picture are reflected in the 3D virtual model; repeat the steps of navigating the at least one drone (15, 15_1, ...15_N) within or over the facility (10) according to the movement commands sent by the server (30), send at least one picture captured by the at least one drone from the new location to the server (30), update the 3D virtual model of the facility from the at least one picture, and sending to each drone (15, 15_1, ...15_N) new movement commands, until the drone reaches at the facility (10) the position and orientation of the second virtual drone as defined in the 3D virtual model.

9. - The system of claim 8, wherein the at least one drone (15, 15_1, ...15_N) further comprises an IMU (157), the at least one drone (15, 15_1, ...15_N) being configured to send through the wireless communications interface (151) data captured by the IMU (157) to the server (30).

10. - The system of either claim 8 or 9, wherein the at least one drone (15, 15_1, ...15_N) further comprises a height sensor and / or a depth sensor and/or other cameras and/or a laser sensor and/or a lidar, the at least one drone (15, 15_1, ... 15_N) being configured to send through the wireless communications interface (151) data captured by said sensor or sensors to the server (30).

11. - The system of any one of claims 8-10, further comprising at least one external system (16, 17) configured to capture data and to send the captured data to the server (30), such that the data captured by the at least one external system (16, 17) contributes to the creation of the 3D virtual model of the facility.

12. A computer program product comprising computer program instructions/code for performing the method according to any one of claims 1-7.

13. A computer-readable memory/medium that stores program instructions/code for performing the method according to any one of claims 1-7.

## Patentansprüche

1. Computerimplementiertes Verfahren zur Steuerung der Navigation von mindestens einer Drohne, umfassend:
von mindestens einer Drohne (15, 15_1, 15_N), ein Navigieren in oder über einer Einrichtung (10), wobei die mindestens eine Drohne (15, 15_1, ..., 15_N) mit einem Bildsensor (156) ausgestattet ist, ein Senden einer Vielzahl von Bildern, die von dem Bildsensor (156) aufgenommen wurden, über eine drahtlose Kommunikationsschnittstelle (152) an einen Server (30) sendet;
**dadurch gekennzeichnet, dass** das computerimplementierte Verfahren ferner Folgendes umfasst:
auf dem Server (30):
Empfangen der Vielzahl von Bildern und, aus den Bildern, Erhalten eines virtuellen 3D-Modells der Einrichtung (10), in oder über der die mindestens eine Drohne (15, 15_1, ..., 15_N) navigiert, wobei das virtuelle 3D-Modell für jede Drohne (15, 15_1, ..., 15_N), die in oder über einer Einrichtung (10) navigiert, Folgendes umfasst: eine erste virtuelle Drohne, die sich innerhalb des virtuellen 3D-Modells an einer Position und in einer Orientierung befindet, die aus den empfangenen Bildern berechnet werden, wobei die Position und die Orientierung die Position und die Orientierung der Drohne (15, 15_1, ..., 15_N) repräsentieren, die in oder über einer Einrichtung (10) navigiert; sowie eine zweite virtuelle Drohne, die sich innerhalb des virtuellen 3D-Modells an einer Zielposition und -orientierung befindet, die die Position und Orientierung repräsentieren, die von der Drohne (15, 15_1, ..., 15_N) erreicht werden soll, die in oder über einer Einrichtung (10) navigiert;
für jede Drohne (15, 15_1, ...15_N), die in oder über einer Einrichtung (10) navigiert, Senden mindestens eines Bewegungsbefehls (416, 417) an die Drohne (15, 15_1, ... 15_N), um den Punkt an der Einrichtung (10) zu erreichen, der dem Standort der zweiten virtuellen Drohne im virtuellen 3D-Modell entspricht;
wobei die mindestens eine Drohne (15, 15_1, ...15_N), die gemäß dem mindestens einen Bewegungsbefehl (416, 417) navigiert, und, von dem neuen Standort der mindestens einen Drohne (15, 15_1, ... 15_N), Bilder, die von dem Bildsensor (156) aufgenommen wurden;
auf dem Server (30):
aus den Informationen, die aus den von jeder Drohne (15, 15_1, ... 15_N) gesendeten Bildern extrahiert wurden, ein Aktualisieren des virtuellen 3D-Modells der Einrichtung (10) und der Position jeder ersten virtuellen Drohne in dem virtuellen 3D-Modell derart, dass durch die Bilder erfasste Änderungen in der Einrichtung (10) in dem virtuellen 3D-Modell widergespiegelt werden;
und
Wiederholen der Schritte des Navigierens der mindestens einen Drohne (15, 15_1, ...15_N) in oder über der Einrichtung (10) gemäß den vom Server (30) gesendeten Bewegungsbefehlen, Senden von Bildern, die von der mindestens einen Drohne von der neuen Position aus aufgenommen wurden, an den Server (30), Aktualisieren des virtuellen 3D-Modells der Einrichtung anhand der Bilder, sowie Senden neuer Bewegungsbefehle an jede Drohne (15, 15_1, ...15_N), bis die Drohne (15, 15_1, ...15_N) in der Einrichtung (10) die Position und Orientierung der zweiten virtuellen Drohne erreicht, wie sie im virtuellen 3D-Modell definiert ist.

2. Verfahren nach Anspruch 1, wobei das virtuelle 3D-Modell ferner eine Vielzahl virtueller Elemente umfasst, die eine Vielzahl entsprechender realer Elemente (11, 12) der Einrichtung (10) repräsentieren.

3. Verfahren nach einem der Ansprüche 1-2, wobei das Definieren einer Zielposition für jede zweite virtuelle Drohne in dem virtuellen 3D-Modell durch eine Routing-Engine (40) durchgeführt wird, wobei die Routing-Engine (40) ferner die Bewegungen berechnet, die jede jeweilige Drohne ausführen muss, wobei die Routing-Engine (40) eine Routing-Inferenz-Engine oder eine Routing-Engine, die ein Modell künstlicher Intelligenz implementiert, oder eine Routing-Engine, die klassische Routing-Techniken implementiert, sein kann.

4. Verfahren nach einem der Ansprüche 1-3, wobei das virtuelle 3D-Modell der Einrichtung (10) unter Verwendung einer oder mehrerer der folgenden Techniken erstellt wird: SLAM-Techniken (Simultaneous Location and Mapping), Computer-Vision-Techniken, Photogrammetrie-basierte Techniken, Deep-Learning-Techniken und Techniken, die auf Bewegungsverfolgung basieren.

5. Verfahren nach einem der Ansprüche 1-4, wobei zur Erstellung des virtuellen 3D-Modells der Einrichtung (10) auch Daten verwendet werden, die von mindestens einem externen System (16, 17) in der Einrichtung (10) erhalten werden.

6. Verfahren nach einem der Ansprüche 1-5, wobei zur Erstellung des virtuellen 3D-Modells der Einrichtung (10) Daten verwendet werden, die von anderen Sensoren der mindestens einen Drohne erhalten werden, wobei die anderen Sensoren einen oder mehrere der folgenden umfassen: IMU, Höhensensor, Tiefensensor, andere Kameras, Lasersensoren und Lidar.

7. Verfahren nach einem der Ansprüche 1-6, bei dem ein menschlicher Bediener über eine Mensch-Maschine-Schnittstelle mit dem virtuellen 3D-Modell interagieren kann, indem eine zweite virtuelle Drohne an einen Ort und/oder in eine Orientierung gezogen wird, die sich von derjenigen unterscheidet, die die entsprechende reale Drohne in der realen Einrichtung (10) hat, so dass die von der Drohne auszuführenden Bewegungen neu berechnet werden und Bewegungsbefehle an die reale Drohne gesendet werden, um die Drohne zu bewegen und/oder zu drehen, bis die erste virtuelle Drohne mit der Position und der Orientierung der zweiten virtuellen Drohne übereinstimmt.

8. System, das Folgendes umfasst:
mindestens eine Drohne (15, 15_1, ..., 15_N), die so konfiguriert ist, dass sie in oder über einer Einrichtung (10) navigiert, wobei die mindestens eine Drohne (15, 15_1, ...(15, 15_1, ..., 15_N) mit einem Bildsensor (156) ausgestattet ist, der so konfiguriert ist, dass er eine Vielzahl von Bildern erfasst, sowie mit einer drahtlosen Kommunikationsschnittstelle (151), die so konfiguriert ist, dass sie die erfassten Bilder sendet;
**dadurch gekennzeichnet, dass** das System ferner Folgendes umfasst:
einen Server (30), der so konfiguriert ist, dass er:
die Vielzahl von Bildern empfängt und, aus den Bildern, ein virtuelles 3D-Modell der Einrichtung (10) erhält, in der oder über der die mindestens eine Drohne (15, 15_1, ...15_N) navigiert, wobei das virtuelle 3D-Modell für jede Drohne (15, 15_1, ..., 15_N), die in oder über einer Einrichtung (10) navigiert, Folgendes umfasst: eine erste virtuelle Drohne, die sich innerhalb des virtuellen 3D-Modells an einer Position und einer Orientierung befindet, die aus dem empfangenen mindestens einen Bild berechnet werden; sowie eine zweite virtuelle Drohne, die sich innerhalb des virtuellen 3D-Modells an einer Zielposition und -orientierung befindet, die die von der Drohne (15, 15_1, ..., 15_N), die in oder über einer Einrichtung (10) navigiert, zu erreichende Position und Orientierung repräsentieren;
für jede Drohne (15, 15_1, ..., 15_N), die in oder über einer Einrichtung (10) navigiert, ein Senden an die Drohne (15, 15_1, ... 15_N) mindestens eines Bewegungsbefehls (416, 417) zum Erreichen des Punktes in der Einrichtung (10), der dem Standort der zweiten virtuellen Drohne im virtuellen 3D-Modell entspricht;
wobei die mindestens eine Drohne (15, 15_1, ...15_N) so konfiguriert ist, dass sie gemäß dem mindestens einen Bewegungsbefehl (416, 417) navigiert und wobei, von dem neuen Standort der mindestens einen Drohne (15, 15_1, .... 15_N), eine Vielzahl von Bildern, die von dem Bildsensor (156) aufgenommen wurden, an den Server (30) gesendet wird;
wobei der Server (30) so konfiguriert ist, anhand von Informationen, die aus dem mindestens einen Bild, das von jeder Drohne (15, 15_1, ...15_N) gesendet wird, extrahiert werden, Folgendes durchzuführen: ein Aktualisieren des virtuellen 3D-Modells der Einrichtung (10) und der Position jeder ersten virtuellen Drohne in dem virtuellen 3D-Modell derart, dass Änderungen in der Einrichtung (10), die durch das mindestens eine Bild erfasst werden, in dem virtuellen 3D-Modell wiedergegeben werden; ein Widerholen der Schritte des Navigierens der mindestens einen Drohne (15, 15_1, ... 15_N) in oder über der Einrichtung (10) gemäß den vom Server (30) gesendeten Bewegungsbefehlen, ein Senden mindestens eines von der mindestens einen Drohne vom neuen Standort aufgenommenen Bildes an den Server (30), ein Aktualisieren des virtuellen 3D-Modells der Anlage anhand des mindestens einen Bildes sowie ein Senden neuer Bewegungsbefehle an jede Drohne (15, 15_1, ... 15_N), bis die Drohne an der Anlage (10) die im virtuellen 3D-Modell definierte Position und Orientierung der zweiten virtuellen Drohne erreicht.

9. System nach Anspruch 8, wobei die mindestens eine Drohne (15, 15_1, ... 15_N) ferner Folgendes umfasst: eine IMU (157), wobei die mindestens eine Drohne (15, 15_1, ... 15_N) so konfiguriert ist, dass sie über die drahtlose Kommunikationsschnittstelle (151) die von der IMU (157) erfassten Daten an den Server (30) sendet.

10. System nach Anspruch 8 oder 9, wobei die mindestens eine Drohne (15, 15_1, ...15_N) ferner einen Höhensensor und/oder einen Tiefensensor und/oder andere Kameras und/oder einen Lasersensor und/oder ein Lidar umfasst, wobei die mindestens eine Drohne (15, 15_1, ...15_N) so konfiguriert ist, dass sie über die drahtlose Kommunikationsschnittstelle (151) Daten, die von dem Sensor oder den Sensoren erfasst wurden, an den Server (30) sendet.

11. System nach einem der Ansprüche 8-10, das ferner mindestens ein externes System (16, 17) umfasst, das so konfiguriert ist, dass es Daten erfasst und die erfassten Daten an den Server (30) sendet, so dass die von dem mindestens einen externen System (16, 17) erfassten Daten zur Erstellung des virtuellen 3D-Modells der Einrichtung beitragen.

12. Computerprogrammprodukt mit Computerprogrammanweisungen/Code zur Durchführung des Verfahrens nach einem der Ansprüche 1-7.

13. Computerlesbarer Speicher/Medium, der Programmanweisungen/Code zur Durchführung des Verfahrens nach einem der Ansprüche 1-7 speichert.

## Revendications

1. Méthode mise en oeuvre par ordinateur de pilotage de navigation d'au moins un drone, comprenant :
depuis au moins un drone (15, 15_1, ..., 15_N) naviguant à l'intérieur ou au-dessus d'une installation (10), le au moins un drone (15, 15_1, ..., 15_N) étant équipé d'un capteur imageur (156), l'envoi d'une pluralité d'images capturées par le capteur imageur (156) à un serveur (30) via une interface de communication sans fil (152) ;
**caractérisée en ce que** la méthode mise en oeuvre par ordinateur comprend en outre :
au niveau du serveur (30) :
la réception de la pluralité d'images et, à partir des images, l'obtention d'un modèle virtuel 3D de l'installation (10) à l'intérieur ou au-dessus de laquelle le au moins un drone (15, 15_1, ..., 15_N) navigue, le modèle virtuel 3D comprenant, pour chaque drone (15, 15_1, ..., 15_N) naviguant à l'intérieur ou au-dessus d'une installation (10) : un premier drone virtuel situé à l'intérieur du modèle virtuel 3D en une position et orientation calculées à partir des images reçues, lesdites position et orientation représentant la position et orientation du drone (15, 15_1, ..., 15_N) naviguant à l'intérieur ou au-dessus d'une installation (10) ; et un deuxième drone virtuel situé à l'intérieur du modèle virtuel 3D en une position et orientation cibles représentant la position et orientation à atteindre par le drone (15, 15_1, ..., 15_N) naviguant à l'intérieur ou au-dessus d'une installation (10) ;
pour chaque drone (15, 15_1, ..., 15_N) naviguant à l'intérieur ou au-dessus d'une installation (10), l'envoi au drone (15, 15_1, ..., 15_N) au moins une commande de mouvement (416, 417) pour atteindre le point au niveau de l'installation (10) qui correspond à la localisation du deuxième drone virtuel au niveau du modèle virtuel 3D ;
le au moins un drone (15, 15_1, ..., 15_N) naviguant en fonction de la au moins une commande de mouvement (416, 417) et, depuis la nouvelle localisation du au moins un drone (15, 15_1, ..., 15_N), des images capturées par le capteur imageur (156) vers le serveur (30) ;
au niveau du serveur (30) :
à partir d'une information extraite à partir des images envoyées par chaque drone (15, 15_1, ..., 15_N), l'actualisation du modèle virtuel 3D de l'installation (10) et de la localisation de chaque premier drone virtuel dans le modèle virtuel 3D, de sorte que des changements dans l'installation (10) capturés par les images soient reflétés dans le modèle virtuel 3D ;
et
la répétition des étapes de navigation du au moins un drone (15, 15_1, ..., 15_N) à l'intérieur ou au-dessus de l'installation (10) en fonction des commandes de mouvement envoyées par le serveur (30), l'envoi d'images capturées par le au moins un drone depuis la nouvelle localisation au serveur (30), l'actualisation du modèle virtuel 3D de l'installation à partir des images, et l'envoi à chaque drone (15, 15_1, ..., 15_N) de nouvelles commandes de mouvement, jusqu'à ce que le drone (15, 15_1, ..., 15_N) au niveau de l'installation (10) atteigne la position et orientation du deuxième drone virtuel tel que définies dans le modèle virtuel 3D.

2. Méthode selon la revendication 1, dans laquelle le modèle virtuel 3D comprend en outre une pluralité d'éléments virtuels représentant une pluralité d'éléments réels (11, 12) correspondants de l'installation (10).

3. Méthode selon l'une quelconque des revendications 1-2, dans laquelle la définition au niveau du modèle virtuel 3D d'une position cible pour chaque deuxième drone virtuel est réalisée par un moteur de routage (40), le moteur de routage (40) calculant en outre les mouvements que chaque drone respectif doit réaliser, dans laquelle le moteur de routage (40) peut être un moteur d'inférence de routage ou un moteur de routage mettant en oeuvre un modèle d'Intelligence Artificielle ou un moteur de routage mettant en oeuvre des techniques de routage classiques.

4. Méthode selon l'une quelconque des revendications 1-3, dans laquelle le modèle virtuel 3D de l'installation (10) est créé à l'aide d'une ou plusieurs parmi les techniques suivantes : techniques de Localisation et Cartographie Simultanées (SLAM), techniques de vision par ordinateur, techniques basées sur la photogrammétrie, techniques d'apprentissage profond et techniques basées sur le suivi de mouvement.

5. Méthode selon l'une quelconque des revendications 1-4, dans laquelle pour créer le modèle virtuel 3D de l'installation (10) est également utilisée une donnée obtenue depuis au moins un système (16, 17) externe dans l'installation (10).

6. Méthode selon l'une quelconque des revendications 1-5, dans laquelle pour créer le modèle virtuel 3D de l'installation (10) des données obtenues depuis d'autres capteurs du au moins un drone sont utilisées, dans laquelle les autres capteurs comprennent un ou plusieurs parmi ce qui suit : UMI, capteur de hauteur, capteur de profondeur, autres caméras, capteurs lasers et lidar.

7. Méthode selon l'une quelconque des revendications 1-6, dans laquelle un opérateur humain peut interagir avec le modèle virtuel 3D via une interface hommemachine, en faisant glisser un deuxième drone virtuel vers une localisation et/ou orientation différentes de celles que le drone réel correspondant a dans l'installation réelle (10), de sorte que le mouvement que le drone doit réaliser soient recalculés et des commandes de mouvement soient envoyées au drone réel afin de déplacer et/ou tourner le drone jusqu'à ce que le premier drone virtuel s'ajuste à la position et orientation du deuxième drone virtuel.

8. Système comprenant :
au moins un drone (15, 15_1, ..., 15_N) configuré pour naviguer à l'intérieur ou au-dessus d'une installation (10), le au moins un drone (15, 15_1, ..., 15_N) étant équipé d'un capteur imageur (156) configuré pour capturer une pluralité d'images et d'une interface de communication sans fil (151) configurée pour envoyer les images capturées ;
**caractérisé en ce que** le système comprend en outre :
un serveur (30) configuré pour :
recevoir la pluralité d'images et, à partir des images, obtenir un modèle virtuel 3D de l'installation (10) à l'intérieur ou au-dessus de laquelle le au moins un drone (15, 15_1, ..., 15_N) navigue, le modèle virtuel 3D comprenant, pour chaque drone (15, 15_1, ..., 15_N) naviguant à l'intérieur ou au-dessus d'une installation (10) : un premier drone virtuel situé à l'intérieur du modèle virtuel 3D en une position et orientation calculées à partir de la au moins une image reçue ; et un deuxième drone virtuel situé à l'intérieur du modèle virtuel 3D en une position et orientation cibles représentant la position et orientation à atteindre par le drone (15, 15_1, ..., 15_N) naviguant à l'intérieur ou au-dessus d'une installation (10) ;
pour chaque drone (15, 15_1, ..., 15_N) naviguant à l'intérieur ou au-dessus d'une installation (10), envoyer au drone (15, 15_1, ..., 15_N) au moins une commande de mouvement (416, 417) pour atteindre le point au niveau de l'installation (10) qui correspond à la localisation du deuxième drone virtuel au niveau du modèle virtuel 3D ;
le au moins un drone (15, 15_1, ..., 15_N) étant configuré pour naviguer en fonction de la au moins une commande de mouvement (416, 417) et, depuis la nouvelle localisation du au moins un drone (15, 15_1, ..., 15_N), envoyer une pluralité d'images capturées par le capteur imageur (156) au serveur (30) ;
le serveur (30) étant configuré pour, à partir d'une information extraite à partir de la au moins une image envoyée par chaque drone (15, 15_1, ..., 15_N), actualiser le modèle virtuel 3D de l'installation (10) et la localisation de chaque premier drone virtuel dans le modèle virtuel 3D, de sorte que des changements dans l'installation (10) capturés par la au moins une image soient reflétés dans le modèle virtuel 3D ; répéter les étapes de navigation du au moins un drone (15, 15_1, ..., 15_N) à l'intérieur ou au-dessus de l'installation (10) en fonction des commandes de mouvement envoyées par le serveur (30), envoyer au moins une image capturée par le au moins un drone depuis la nouvelle localisation au serveur (30), actualiser le modèle virtuel 3D de l'installation à partir de la au moins une image, et envoyer à chaque drone (15, 15_1, ..., 15_N) de nouvelles commandes de mouvement, jusqu'à ce que le drone atteigne au niveau de l'installation (10) la position et orientation du deuxième drone virtuel telles que définies dans le modèle virtuel 3D.

9. Système selon la revendication 8, dans lequel le au moins un drone (15, 15_1, ..., 15_N) comprend en outre une UMI (157), le au moins un drone (15, 15_1, ..., 15_N) étant configuré pour envoyer via l'interface de communication sans fil (151) une donnée capturée par l'UMI (157) au serveur (30).

10. Système selon l'une quelconque des revendications 8 ou 9, dans lequel le au moins un drone (15, 15_1, ..., 15_N) comprend en outre un capteur de hauteur et/ou un capteur de profondeur et/ou d'autres caméras et/ou un capteur laser et/ou un lidar, le au moins un drone (15, 15_1, ..., 15_N) étant configuré pour envoyer via l'interface de communication sans fil (151) une donnée capturée par lesdits capteurs ou capteur au serveur (30).

11. Système selon l'une quelconque des revendications 8-10, comprenant en outre au moins un système (16, 17) externe configuré pour capturer une donnée et pour envoyer la donnée capturée au serveur (30), de sorte que la donnée capturée par le au moins un système (16, 17) externe contribue à la création du modèle virtuel 3D de l'installation.

12. Produit de programme informatique comprenant des instructions/un code de programme informatique pour réaliser la méthode selon l'une quelconque des revendications 1-7.

13. Mémoire/Support lisible par ordinateur qui stocke des instructions/un code de programme pour réaliser la méthode selon l'une quelconque des revendications 1-7.
